# EUROPÄISCHE PATENTSCHRIFT

(11) **EP 1 514 813 B1**
(45) Veröffentlichungstag und Bekanntmachung des Hinweises auf die Patenterteilung: **27.02.2008**
(21) Anmeldenummer: 04103316.8
(22) Anmeldetag: 13.07.2004
(51) Int. Cl.: B65G 1/04, B65G 19/02, B65H 67/00

(54) **Tambourlager**
Storage device for roll goods
Dispositif de stockage d'articles de type rouleau

(30) Priorität: 29.07.2003 DE 10334488
(43) Veröffentlichungstag der Anmeldung: 16.03.2005
(73) Patentinhaber: Voith Patent GmbH, 89522 Heidenheim (DE)
(72) Erfinder: Dropczynski, Hartmut, 41541 Dormagen (DE)

(56) Entgegenhaltungen:
- DE-A1- 2 459 229
- DE-C1- 3 218 282
- DE-C1- 3 910 193
- GB-A- 2 056 394
- US-A- 5 312 060
- PATENT ABSTRACTS OF JAPAN Bd. 008, Nr. 220 (M-330), 6. Oktober 1984 (1984-10-06) -& JP 59 102709 A (HITACHI KINZOKU KK), 13. Juni 1984 (1984-06-13)

## Beschreibung

Die Erfindung betrifft ein Tambourlager gemäß dem Oberbegriff des Anspruchs 1.

Ein derartiges Tambourlager ist aus der DE-OS 2459229 bekannt.

Ein Tambourlager dient der Aufnahme voller Tamboure als Puffer zwischen den Bearbeitungsgängen einer Produktionslinie, insbesondere in einer Papier- oder Kartonfabrik. Derartige Tambourlager weisen Führungsschienen an beiden Längsseiten mit einem geringen Gefälle auf, auf denen die Tamboure entlangrollen können. Dabei werden sie von einem Hebelsystem festgehalten oder dämpfend gebremst. Die Tamboure gelangen in der gleichen Reihenfolge zur Entnahmestelle, in der sie in das Tambourlager gelegt wurden. Oft werden derartige Tambourlager direkt an den Pope-Roller angebunden, in dem die Papier- oder Kartonbahn auf den Leertambour aufgewickelt wird.

Insbesondere bei älteren oder verschlissenen Tambouren kann es zu Pendelbewegungen des Tambours kommen. Diese Pendelbewegungen sind um so stärker, je größer das Spiel zwischen den Führungsschienen und dem Tambour bzw. der Tambourlagerung ist. In Extremfällen kann es zu einer Schieflage des Tambours kommen, bei der sich der Tambour zwischen den Führungsschienen verkeilt. Eine derartige Situation verlangt nicht nur einen erheblichen Einsatz von Ressourcen, beispielsweise eines Krans oder einer anderen Hebeeinrichtung, um den Tambour wieder frei zu bekommen. Die Stützanordnungen für die Führungsschienen müssen sehr stabil ausgeführt sein, so daß sie in der Lage sind, hohe Axialkräfte aufzunehmen, die bei einem derartigen Anstoßen entstehen. Ein seitliches Nachgeben der Führungsschienen würde automatisch das Führungsspiel verändern und ein Verklemmen des Tambours begünstigen. Dies wiederum hat zur Folge, daß das Tambourlager nur mit einem relativ großen Kostenaufwand konstruiert werden kann.

Der Erfindung liegt die Aufgabe zugrunde, auf kostengünstige Art das Risiko von Störungen beim Betrieb eines Tambourlagers klein zu halten.

Diese Aufgabe wird bei einem Tambourlager der eingangs genannten Art durch die Merkmale des kennzeichnenden Teils des Anspruchs 1 gelöst.

Man ist also nicht mehr oder nicht mehr nur darauf angewiesen, den Tambour unter der Wirkung der Schwerkraft eine schiefe Ebene herabrollen zu lassen. Man verwendet vielmehr eine Antriebseinrichtung, die auf beide Enden des Tambours gleichartig einwirkt. Damit wird sichergestellt, daß die beiden Enden des Tambours gleichermaßen bewegt oder vorgeschoben werden, so daß das Risiko klein gehalten wird, daß sich der Tambour zwischen den Führungsschienen verkeilt oder anfängt zu pendeln. Durch die Antriebseinrichtung ist es daher möglich, die mechanische Konstruktion der Führungsschienen und der sie abstützenden Holme schwächer auszuführen, was zu einer erheblichen Verminderung der Kosten führt. Zudem wird das Risiko von Störungen, die sich durch ein Verkeilen des Tambours zwischen den Führungsschienen oder durch das Auftreten von Pendelbewegungen ergeben könnten, erheblich vermindert. Auch dies führt zu einem kostengünstigen Betrieb des Tambourlagers.

Dadurch daß die Antriebseinrichtung für jedes Ende des Tambours einen beweglichen Anschlag aufweist, ist eine besonders einfache und damit kostengünstige Ausgestaltung der Antriebseinrichtung gegeben. Der Anschlag wird lediglich auf Druck belastet. Man fährt den Anschlag also in Kontakt mit dem Tambour. Bei einer weiteren Bewegung des Anschlags wird der Tambour auf den Führungsschienen verschoben und zwar unter der Führung der Antriebseinrichtung. Die Antriebseinrichtung stellt also sicher, daß sich der Tambour gegenüber den Führungsschienen nicht schief stellt oder zu schwingen anfängt. Vielmehr können die beiden Enden des Tambours über die gesamte Bewegungsstrecke des Tambours so gesteuert werden, daß das Risiko von Störungen außerordentlich klein bleibt. Wenn also der Anschlag bewegt wird, dann kann er den Tambour vor sich herschieben oder der Tambour kann dem Anschlag folgen. In jedem Fall ist gewährleistet, daß beide Enden des Tambours die gleiche Bewegung ausführen können.

Dadurch, daß der Anschlag zwischen einer aktiven Position, in der er mit dem Tambour in Eingriff bringbar ist, und einer passiven Position, in der er ohne Eingriff mit dem Tambour bewegbar ist, verlagerbar ist, ist es, erlaubt, den Anschlag in weiten Grenzen frei zu bewegen, ohne daß er durch den Tambour behindert wird. Wenn beispielsweise der Anschlag an einem Tambour vorbeibewegt werden soll, dann wird der Anschlag in die passive Position bewegt. Nur dann, wenn er einen Antrieb bewegen soll, wird er in die aktive Position verlagert.

Dadurch, daß der Anschlag durch eine Rückstelleinrichtung in die aktive Position vorgespannt ist, sorgt man also dafür, daß ohne Eingriff von außen oder von außen wirkende Kräfte der Anschlag immer in der aktiven Position ist. Wenn der Anschlag dann auf einen Tambour trifft und ihn bewegen soll, ist diese Funktion sichergestellt.

Dadurch, daß der Anschlag in eine Förderrichtung und eine Rücklaufrichtung bewegbar ist, muß manalso ihn nicht in einem Kreis oder Umlauf laufen lassen, sondern man kann ihn zwischen einzelnen Magazinpositionen hin und her bewegen. Dies hält zum einen die Zeiten klein, in denen der Anschlag bewegt wird. Zum anderen wird auch ein Verschleiß durch übermäßig lange Bewegungsabschnitte vermieden.

Dadurch, daß der Anschlag bei einer Bewegung in die Rücklaufrichtung durch den Tambour in seine passive Position bewegt wird, ist es möglich, die Funktion des Anschlags auf eine Förderbewegung zu beschränken, ohne daß es erforderlich ist, hier zusätzliche Maßnahmen zu treffen. Wenn der Anschlag am Tambour entgegen der Förderrichtung, nämlich in der Rücklaufrichtung, vorbei oder unter dem Tambour hindurch bewegt wird, dann wird der Anschlag sozusagen passiviert, d.h. er verändert die Position des Tambours nicht. Aufgrund der Rück-stelleinrichtung wird er aber bei einer entsprechenden Bewegung in Förderrichtung in die aktive Position gebracht, so daß er den Tambour entsprechend verlagern kann.

Hierbei ist bevorzugt, daß die Führungsschienen horizontal angeordnet oder in Tambourtransportrichtung nach oben geneigt sind. In diesem Fall wird der Anschlag verwendet, um den Tambour vor sich herzuschieben. Eine entsprechend schwache Neigung vorausgesetzt, muß der Anschlag dabei keine übermäßig großen Kräfte aufbringen.

Vorzugsweise ist der Anschlag an einem Träger befestigt, der parallel zu den Führungsschienen geführt ist. Der Träger kann in Bewegungsrichtung eine relativ große Länge aufweisen, also eine Länge, die größer ist als die Länge des Anschlags. Man kann also auf relativ einfache Weise dafür Sorge tragen, daß der Anschlag immer eine gewünschte Ausrichtung behält. Dies erleichtert es, die Bewegung der beiden Anschläge an den beiden axialen Enden des Tambours synchron zu gestalten.

Auch ist von Vorteil, wenn der Anschlag durch eine Rolle gebildet ist. In diesem Fall kann man den Tambour auf den Führungsschienen abrollen lassen. Der Anschlag kann dem Tambour folgen, ohne daß hier durch Reibung ein größerer Verschleiß zu befürchten ist. Vielmehr dreht sich die Rolle dann, wenn sie den Tambour vor sich herschiebt oder, wenn die Führungsschienen nach unten geneigt sind, den Tambour bei seiner Bewegung abstützt.

Vorzugsweise ist der bewegliche Anschlag über eine Koppelanordnung mit einem stationären Antrieb verbunden. Wenn der Antrieb stationär bleiben kann, ist es nicht erforderlich, eine Energieversorgung beweglich auszugestalten. Vielmehr kann die Energiezufuhr zum Antrieb fest installiert bleiben. Dies ist eine weitere Maßnahme, um die Kosten des Tambourlagers niedrig zu halten.

Vorzugsweise sind die Anschläge an beiden Enden des Tambours mit dem gleichen Antrieb verbunden. Dies ist eine besonders einfache Maßnahme, um beide Anschläge gleichartig bewegen zu können, ohne komplizierte Steuerungsmaßnahmen ergreifen zu müssen. Der Antrieb kann beispielsweise auf eine Welle wirken, die wiederum beide Anschläge an beiden Enden des Tambours bewegt.

Hierbei ist bevorzugt, daß der Anschlag ohne bewegliche Energieversorgungseinrichtung ausgebildet ist. Die Energie, die man zum Verlagern des Anschlags benötigt, muß also nicht über bewegte Leitungen zugeführt werden. Dies spart Kosten.

Vorzugsweise ist in mindestens einer Magazinposition eine verlagerbare Stelleinrichtung für den Anschlag vorgesehen. Die Stelleinrichtung dient dazu, den Anschlag von der aktiven in die passive Position zu verlagern. Dies ist beispielsweise dann wünschenswert, wenn man den Anschlag an einem Tambour vorbeibewegen möchte, ohne den Tambour anzutreiben. In diesem Fall wird die Stelleinrichtung aktiviert, die dafür sorgt, daß der Anschlag nicht mit dem Tambour in Eingriff kommt. Das Tambourlager erhält dadurch eine sehr große Flexibilität. Der Tambour kann praktisch an jeder Stelle des Magazins abgeholt und an jede freie, in Bewegungsrichtung der Tamboure liegende Stelle transportiert werden, ohne daß eine teure Energieversorgung mitgeschleppt werden muß.

Vorzugsweise ist die Stelleinrichtung ortsfest angeordnet und der Anschlag verlagert sich beim Überfahren der aktivierten Stelleinrichtung. Wenn die Stelleinrichtung ortsfest angeordnet ist, dann ist es nicht erforderlich, eine Energie einem bewegten Element zuzuführen. Die Ansteuerung der Stelleinrichtung wird also vereinfacht. Die notwendige Energie, um den Anschlag aus seiner aktiven Position in die passive Position zu verlagern, ergibt sich dann aus der Bewegung des Anschlags gegenüber der Stelleinrichtung.

Bevorzugterweise ist der Anschlag an einem Arm eines zweiarmigen Hebels angeordnet und die Stelleinrichtung wirkt auf den anderen Arm. Die Stelleinrichtung kommt also nicht in Konflikt mit dem Tambour oder dem Anschlag. Dies vereinfacht die Konstruktion weiter.

Bevorzugterweise ist die Stelleinrichtung in Axialrichtung des Tambours seitlich versetzt zur Koppelanordnung angeordnet. Dies vereinfacht den Aufbau weiter. Man muß nicht befürchten, daß die Stelleinrichtung und die Koppelanordnung kollidieren.

Vorzugsweise ist die Koppelanordnung als Kette ausgebildet. Eine Kette läßt sich leicht über Umlenkrollen und Antriebsräder umlenken, so daß sie Antriebskräfte auf den Anschlag in beide Richtungen ausüben kann. Eine Kette ist ausreichend stabil, um die zur Bewegung von Tambouren notwendigen Kräfte aufbringen zu können. Voll bewickelte Tamboure können durchaus ein Gewicht von mehreren 1.000 kg erreichen.

Vorzugsweise weist die Antriebseinrichtung einen Positionssensor auf. Die Antriebseinrichtung "weiß" also immer, wo sich der Anschlag befindet. Dies erleichtert die Steuerung.

Vorzugsweise ist die Antriebseinrichtung in der Rücklaufrichtung schneller als in der Förderrichtung bewegbar. In der Förderrichtung muß die Antriebseinrichtung die relativ große Masse des Tambours bewegen. Diese Masse kann durchaus mehrere 10.000 kg betragen. In die Rücklaufrichtung muß die Antriebseinrichtung hingegen keine Last bewegen. Wenn man für beide Bewegungsrichtungen den gleichen Antrieb verwendet, beispielsweise einen richtungsveränderlichen Motor, dann kann man die Leistungsreserven dieses Motors ausnutzen. Er kann also in der Rücklaufrichtung mit einer höheren Drehzahl und einem verminderten Drehmoment arbeiten. Wenn man für die Bewegung in der Rücklaufrichtung eine höhere Geschwindigkeit verwenden kann, dann erhöht dies die Leistungsfähigkeit des Tambourlagers. Man benötigt nämlich weniger Zeit, um die Antriebseinrichtung für die Bewegung eines neuen Tambours richtig zu positionieren.

Die Erfindung wird im folgenden anhand eines bevorzugten Ausführungsbeispiels in Verbindung mit der Zeichnung näher beschrieben. Hierin zeigen:
- Fig. 1: eine schematische Seitenansicht eines Tambourlagers,
- Fig. 2: einen vergrößerten Ausschnitt aus Fig. 1 und
- Fig. 3: eine Schnittansicht III-III nach Fig. 2.

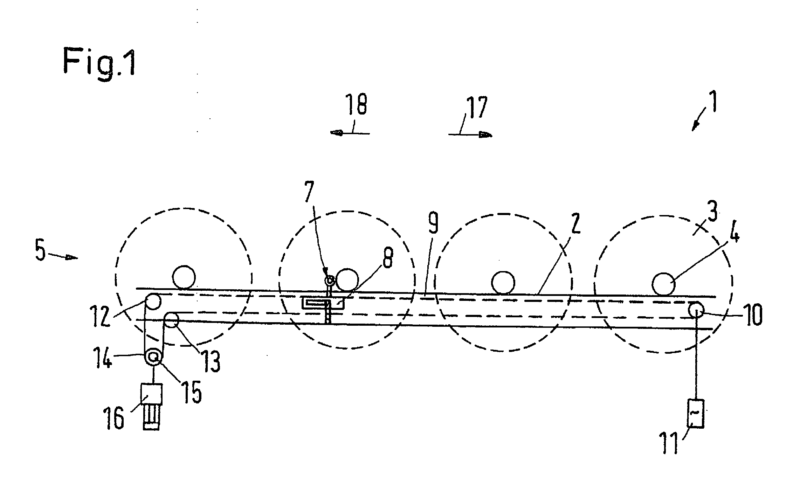

Fig. 1 zeigt ein Tambourlager 1 von der Seite. Das Tambourlager weist eine Führungsschiene 2 auf, auf der insgesamt vier Tamboure 3 mit ihren Wellenstummeln 4 ruhen. In nicht näher dargestellter, aber an sich bekannter Weise sind natürlich auf der gegenüberliegenden Seite, also am anderen axialen Ende der Tamboure 3, entsprechende Elemente vorgesehen, also wiederum eine Führungsschiene 2, auf der die Wellenstummel 4 am anderen Ende der Tamboure 3 ruhen.

Die Tamboure 3 liegen jeweils in einer Magazinposition. In nicht näher dargestellter, aber an sich bekannter Weise sind in den Magazinpositionen Hilfseinrichtungen angeordnet. Diese Hilfseinrichtungen dienen zum einen dazu, den jeweiligen Tambour 3 in der Magazinposition festzuhalten. Die Hilfseinrichtungen können ferner dazu verwendet werden, den Tambour langsam zu drehen, um eine "Bananenbildung" zu vermeiden.

Wenn ein Tambour 3 von einer Magazinposition in die nächste bewegt werden soll, dann rollt er auf den Führungsschienen 2 ab. Im vorliegenden Ausführungsbeispiel sind die Führungsschienen 2 horizontal angeordnet oder verlaufen leicht geneigt nach oben und zwar von einem Beschickungsende 5 am linken Ende (bezogen auf Fig. 1) zu einem Entnahmeende 6 an der rechten Seite.

Um die Tamboure 3 von einer Position zur nächsten zu bewegen, ist eine Antriebseinrichtung vorgesehen, die im folgenden näher erläutert werden wird.

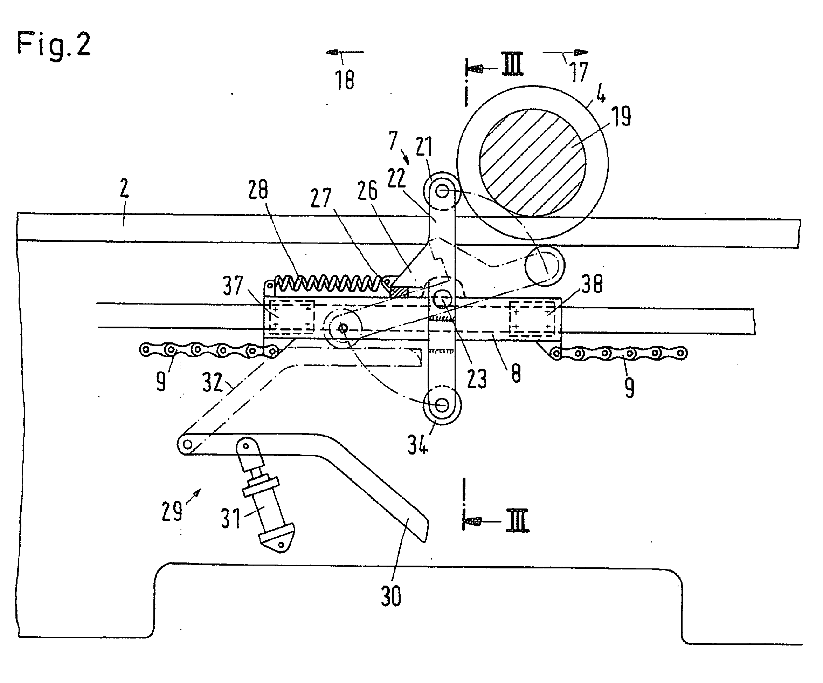

Die Antriebseinrichtung weist einen Anschlag 7 auf, der an einem in Fig. 2 vergrößert dargestellten Träger 8 befestigt ist. Der Träger 8 (in Fig. 1 nur schematisch dargestellt) ist mit einer Kette 9 verbunden, genauer gesagt mit dem oberen Trumm der Kette 9, die über eine Umlenkrolle 10 am Entnahmeende 6 geführt ist. An diesem Entnahmeende 6 ist ein Positionssensor 11 angeordnet, der beispielsweise als Drehwinkelsensor für die Umlenkrolle 10 ausgebildet ist. Der Positionssensor 11 ist mit einer nicht näher dargestellten Steuereinrichtung verbunden, die den Antrieb steuert, also die Position des Anschlags 7.
Das andere Ende der Kette 9 ist über zwei Umlenkrollen 12, 13 zu einem Antriebsritzel 14 geführt, das auf einer über die Breite des Tambourlagers durchgehenden Drehpunktwelle 15 sitzt. Die Drehpunktwelle 15 ist durch einen Motor 16 angetrieben. Der Motor 16 ist beispielsweise als polumschaltbarer Motor ausgebildet, d.h. er kann die Drehpunktwelle 15 mit unterschiedlichen Geschwindigkeiten antreiben. Dies kann man dazu ausnutzen, den Anschlag 7 in eine Förderrichtung 17 langsamer zu bewegen als in eine Rückstellrichtung 18 bzw. den Anschlag 7 in beiden Richtungen schnell zu bewegen, wenn er unter dem Wellenstummel 4 des Tambours wegtaucht.

Wie oben erwähnt, befindet sich eine entsprechende Antriebseinrichtung mit den Elementen 7 bis 14 auf der anderen Seite des Tambourlagers 1. Die Drehpunktwelle 15 ist für beide Seiten die gleiche. Wenn also der Motor 16 die Drehpunktwelle 15 antreibt, dann werden die Anschläge 7 an beiden axialen Enden der Tamboure 3 exakt gleich bewegt. Die Tamboure 3 können sich bei einer derartigen Bewegung zwischen zwei Magazinpositionen also weder schrägstellen noch können sie anfangen zu schwingen. Dementsprechend wird die mechanische Belastung auf die Führungsschienen 2 klein gehalten.

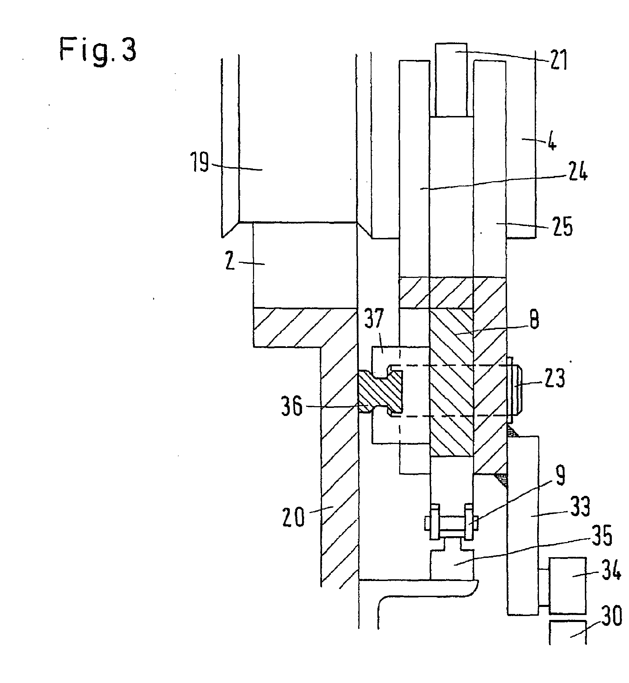

Die Fig. 2 und 3 zeigen nun in vergrößerter Darstellung den Aufbau des Anschlags 7 im Zusammenwirken mit dem Wellenstummel 4 des Tambours, der selbst in Fig. 2 nicht näher dargestellt ist.

Der Wellenstummel 4 weist zunächst einen Abschnitt 19 mit geringfügig vermindertem Durchmesser auf. Mit diesem Abschnitt 19 liegt der Tambour auf der Führungsschiene 2 auf. Die Führungsschiene 2 ist auf Seitenholmen 20 abgestützt.

Der Anschlag 7 selbst ist durch eine Rolle 21 gebildet, die am Ende eines Arms eines zweiarmigen Hebels 22 angeordnet ist. Der Hebel 22 ist um einen Drehpunkt 23 schwenkbar, der am Träger 8 ausgebildet ist. Der Arm des Hebels 22, der die Rolle 21 trägt, ist dabei gabelartig ausgebildet, d.h. er weist zwei Zinken 24, 25 auf, zwischen denen die Rolle 21 aufgenommen ist. Wenn also der Anschlag 7 gegen den Wellenstummel 4 des Tambours gedrückt wird, dann rollt der Tambour mit seinem Abschnitt 19 verminderten Durchmessers, also dem drehbaren Lager des Tambours, auf der Führungsschiene 2 ab. Die Rolle 21 dreht sich, solange sie am Wellenstummel 4 anliegt. Die auf dem Tambour aufgewickelte Wickelrolle (nicht dargestellt) dreht sich dabei nicht mit.

Der Hebel 22 weist an seinem die Rolle 21 tragenden Arm 24, 25 eine Stütznase 26 auf, die an einem Anschlag 27 auf dem Träger 8 zur Anlage kommt, wenn der Hebel 22 durch eine Feder 28, im vorliegenden Fall eine Zugfeder, in die in Fig. 2 mit durchgezogenen Linien dargestellte Position verschwenkt wird, in der der Anschlag 7 in seiner "aktiven" Position liegt. In der aktiven Position kann der Anschlag 7 mit dem Wellenstummel 4 des Tambours zusammenwirken.

Gegen die Kraft der Feder 28 kann der Hebel 22 (ge-strichelt dargestellt) im Uhrzeigersinn verschwenkt werden, so daß sich der Anschlag 7 in seiner "passiven" Position befindet, also in einer Position, in der er nicht in Eingriff mit dem Wellenstummel 4 des Tambours kommen kann.

Die Bewegung des Anschlags 7 von der aktiven Position in die passive Position kann auf zwei Arten erfolgen:

Wenn der Träger 8 in die Rücklaufrichtung 18 bewegt wird, dann kommt die Rolle 21 in Kontakt mit dem Wellenstummel 4, bezogen auf die Fig. 2 an der rechten Seite. Eine weitere Bewegung des Trägers 8 in die Rücklaufrichtung 18 führt dann dazu, daß der Hebel 22 im Uhrzeigersinn verschwenkt wird, so daß der Anschlag 7 sozusagen unter dem Wellenstummel 4 hindurchtauchen kann. Der Tambour wird also nicht in die Rücklaufrichtung 18 bewegt.

Sobald der Anschlag 7 den Wellenstummel 4 des Tambours passiert hat, wird er durch die Feder 28 wieder in seine aktive Position bewegt, so daß er bei einer nachfolgenden Bewegung in die Förderrichtung 17 wieder in der Lage ist, auf den Wellenstummel 4 des Tambours einzuwirken und den Tambour auf den Führungsschienen 2 in die nächste Position zu rollen.

Zusätzlich ist eine Stelleinrichtung 29 vorgesehen, die eine Schiene 30 aufweist, die aus der in Fig. 2 mit durchgezogenen Linien dargestellten Position durch einen Stellmotor 31, beispielsweise eine pneumatische Kolben-Zylinder-Einrichtung, in die mit strichpunktierten Linien dargestellte Position verschwenkt werden kann. Die Schiene 30 weist in dieser Stellung einen geneigten Abschnitt 32 auf, mit dem der zweite Arm 33 des Hebels 22 in Eingriff kommt, wenn der Träger 8 in Förderrichtung 17 bewegt wird, also in Fig. 2 von links nach rechts. Am unteren Ende des zweiten Arms 33 ist eine Rolle 34 angeordnet, die es ermöglicht, daß die Reibung beim Überfahren der Schiene 30 klein bleibt. Wenn also die Schiene 30 in die mit strichpunktierten Linien dargestellte Position verschwenkt worden ist, dann wird der Hebel 22 beim Überfahren dieser Schiene 30 wiederum im Uhrzeigersinn verschwenkt gegen die Kraft der Feder 28, so daß der Anschlag 7 erneut unter dem Wellenstummel 4 des Tambours hindurchtauchen kann.

Selbstverständlich sind die Schienen 30 auf beiden Seiten des Tambourlagers 1 miteinander synchronisiert, so daß nicht auf einer Seite ein Antrieb eines Tambours erfolgt, während dieser Antrieb durch den Anschlag 7 auf der anderen Seite des Tambours entfällt.

Wie aus Fig. 3 hervorgeht, ist die Kette 9 auf einer Ketten-Stützschiene 35 abgestützt. Diese Ketten-Stütz-schiene ist aus Gründen der Übersicht in den Fig. 1 und 2 nicht dargestellt. Die Ketten-Stützschiene 35 verhindert, daß die Kette 9 durchhängt, so daß man über den Positionssensor 11 immer relativ genau weiß, wo sich der Anschlag 7 befindet.

Wie aus Fig. 3 hervorgeht, ist der Träger 8 an einer Profilschiene 36 geführt und zwar mit zwei Lagern 37, 38. Der Träger 8 kann sich also in Bewegungsrichtung nicht verkanten. Die beiden Lager 37, 38 haben hier einen ausreichenden Abstand zueinander.

Der zweite Arm 33 des Hebels 22 ist in Axialrichtung der Tamboure 3 seitlich versetzt außerhalb des ersten Arms 24, 25 angeordnet. Er kommt also nicht mit der Ketten-Stützschiene 35 in Konflikt. Die Rolle 34 kann wiederum axial außerhalb angeordnet sein, wie auch die Schiene 30. Dies alles trägt dazu bei, die Bewegungssteuerung des Trägers 8 mit dem Anschlag 7 zu vereinfachen.

Dadurch, daß die Führungsschiene 2 eine leichte Neigung nach oben hat, steht der Tambour 3 mit seinem Wellenstummel 4 immer in einem gewissen Druckkontakt mit dem Anschlag 7.

Die Arbeitsweise des Tambourlagers 1 ist nun wie folgt:

Wenn ein Tambour 3 nach rechts bewegt werden soll, also von dem Beschickungsende 5 in Richtung auf das Entnahmeende 6, dann wird der Träger 8 so verfahren, daß sein Anschlag 7 am Wellenstummel 4 des Tambours 3 anliegt. Diese Bewegung erfolgt an beiden axialen Enden des Tambours 3 gleichartig, so daß die beiden Anschläge 7 den gleichen Druck auf den Wellenstummel 4 ausüben. Wenn dann der Träger 8 über den Motor 16 nach rechts bewegt wird, dann wird der Tambour 3 verlagert. Die Rolle 21 rollt dabei am Wellenstummel 4 ab. Die Stütznase 26 stützt sich auf dem Anschlag 27 ab, so daß die benötigte Antriebskraft auf den Tambour übertragen werden kann.

Wenn der Tambour 3 seine gewünschte Position erreicht hat, wird er von nicht näher dargestellten Mitteln festgehalten und ggf. in Drehungen versetzt.

Der Träger 8 kann nun beispielsweise in Rücklaufrichtung 18 bewegt werden, um einen weiteren Tambour ebenfalls zu fördern, der näher am Beschickungsende 5 liegt. Dabei muß der Anschlag 7 zunächst den Wellenstummel 4 dieses Tambours passieren. Dies ist problemlos dadurch möglich, daß der Anschlag unter dem Wellenstummel 4 hindurchtauchen kann, wenn der Hebel 22 durch den Wellenstummel im Uhrzeigersinn gegen die Kraft der Feder 28 verschwenkt wird.

Wenn der Anschlag 7 hingegen einen Tambour bewegen soll, der näher am Entnahmeende 6 liegt, dann wird bei dem Tambour, der den Anschlag 7 passieren soll, ohne ihn zu transportieren, die Stelleinrichtung 29 aktiviert. Wenn der Träger 8 dann an dem entsprechenden Tambour vorbeigefahren wird, ist der Hebel 22 zuvor durch die Schiene 30 verschwenkt worden, so daß der Anschlag 7 wiederum unter dem Wellenstummel 4 des Tambours hindurchtaucht.

Wie oben erwähnt, kann der Motor 16 nicht nur in zwei unterschiedlichen Richtungen betrieben werden. Er wird auch mit unterschiedlichen Geschwindigkeiten betrieben. Vorzugsweise wird er in der Rücklaufrichtung 18 mit einer wesentlich größeren Geschwindigkeit betrieben als in der Förderrichtung 17. Der Anschlag 7 kann dann sehr schnell in die gewünschten Positionen verfahren werden. Der Transport der Tamboure erfolgt dann entsprechend langsamer, was aber ohne weiteres in Kauf zu nehmen ist.

## Patentansprüche

1. Tambourlager (1) mit Führungsschienen (2) an beiden Längsseiten, die mindestens zwei Magazinpositionen für einen Tambour (3) miteinander verbinden, wobei eine Antriebseinrichtung (7-16) vorgesehen ist, die den Tambour (3) von einer Magazinposition zu einer anderen Magazinposition bewegt, wobei die Antriebseinrichtung (7-16) gleichartig auf beide Enden des Tambours (3) einwirkt, wobei die Antriebseinrichtung (7-16) für jedes Ende des Tambours (3) einen beweglichen Anschlag (7) aufweist, wobei der Anschlag (7) zwischen einer aktiven Position, in der er mit dem Tambour (3) in Eingriff bringbar ist, und einer passiven Position, in der er ohne Eingriff mit dem Tambour (3) bewegbar ist, verlagerbar ist und wobei der Anschlag (7) durch eine Rückstelleinrichtung (28) in die aktive Position vorgespannt ist,
**dadurch gekennzeichnet,**
**daß** der Anschlag (7) in eine Förderrichtung (17) und eine Rücklaufrichtung (18) bewegbar ist und
**daß** der Anschlag (7) bei einer Bewegung in die Rücklaufrichtung (18) durch den Tambour (3) in seine passive Position bewegt wird.

2. Tambourlager (1) nach Anspruch 1, **dadurch gekennzeichnet, daß** die Führungsschienen (2) horizontal angeordnet oder in Tambourtransportrichtung nach oben geneigt sind.

3. Tambourlager (1) nach Anspruch 2, **dadurch gekennzeichnet, daß** der Anschlag (7) an einem Träger (8) befestigt ist, der parallel zu den Führungsschienen (2) geführt ist.

4. Tambourlager (1) nach Anspruch 2 oder 3, **dadurch gekennzeichnet, daß** der Anschlag (7) durch eine Rolle (21) gebildet ist.

5. Tambourlager (1) nach einem der Ansprüche 2 bis 4, **dadurch gekennzeichnet, daß** der bewegliche Anschlag (7) über eine Koppelanordnung (9) mit einem stationären Antrieb (16) verbunden ist.

6. Tambourlager (1) nach Anspruch 5, **dadurch gekennzeichnet, daß** die Anschläge (7) an beiden Enden des Tambours (3) mit dem gleichen Antrieb (16) verbunden sind.

7. Tambourlager (1) einem der vorhergehenden Ansprüche, **dadurch gekennzeichnet, daß** der Anschlag (7) ohne bewegliche Energieversorgungseinrichtung ausgebildet ist.

8. Tambourlager (1) nach einem der vorhergehenden Ansprüche, **dadurch gekennzeichnet, daß** in mindestens einer Magazinposition eine verlagerbare Stelleinrichtung (29) für den Anschlag (7) vorgesehen ist.

9. Tambourlager (1) nach Anspruch 8, **dadurch gekennzeichnet, daß** die Stelleinrichtung (29) ortsfest angeordnet ist und sich der Anschlag (7) beim Überfahren der aktivierten Stelleinrichtung (29) verlagert.

10. Tambourlager (1) nach Anspruch 8 oder 9, **dadurch gekennzeichnet, daß** der Anschlag (7) an einem Arm (24, 25) eines zweiarmigen Hebels (22) angeordnet ist und die Stelleinrichtung (29) auf den anderen Arm (33) wirkt.

11. Tambourlager (1) nach einem der Ansprüche 8 bis 10, **dadurch gekennzeichnet, daß** die Stelleinrichtung (29) in Axialrichtung des Tambours (3) seitlich versetzt zur Koppelanordnung (9) angeordnet ist.

12. Tambourlager (1) nach einem der Ansprüche 5 bis 11, **dadurch gekennzeichnet, daß** die Koppelanordnung (9) als Kette ausgebildet ist.

13. Tambourlager (1) nach einem der vorhergehenden Ansprüche, **dadurch gekennzeichnet, daß** die Antriebseinrichtung einen Positionssensor (11) aufweist.

14. Tambourlager (1) nach einem der vorhergehenden Ansprüche, **dadurch gekennzeichnet, daß** die Antriebseinrichtung in der Rücklaufrichtung (18) schneller als in der Förderrichtung (17) bewegbar ist.

## Claims

1. Spool store (1) having guide rails (2) on both long sides, which join at least two magazine positions for a spool (3) to one another, a drive device (7-16) being provided which moves the spool (3) from one magazine position to another magazine position, the drive device (7-16) acting in the same way on both ends of the spool (3), the drive device (7-16) having a movable stop (7) for each end of the spool (3), it being possible for the stop (7) to be displaced between an active position, in which it can be brought into engagement with the spool (3), and a passive position, in which it can be moved without engaging with the spool (3), and the stop (7) being prestressed into the active position by a restoring device (28),
**characterized**
**in that** the stop (7) can be moved in a conveying direction (17) and a returning direction (18), and
**in that** the stop (7) is moved into its passive position by the spool (3) during a movement in the returning direction (18).

2. Spool store (1) according to Claim 1, **characterized in that** the guide rails (2) are arranged horizontally or inclined upwards in the spool transport direction.

3. Spool store (1) according to Claim 2, **characterized in that** the stop (7) is fixed to a carrier (8) which is guided parallel to the guide rails (2).

4. Spool store (1) according to Claim 2 or 3, **characterized in that** the stop (7) is formed by a roller (21).

5. Spool store (1) according to one of Claims 2 to 4, **characterized in that** the movable stop (7) is connected to a stationary drive (16) via a coupling arrangement (9).

6. Spool store (1) according to Claim 5, **characterized in that** the stops (7) at both ends of the spool (3) are connected to the same drive (16).

7. Spool store (1) according to one of the preceding claims, **characterized in that** the stop (7) is constructed without a movable energy supply device.

8. Spool store (1) according to one of the preceding claims, **characterized in that**, in at least one magazine position, a displaceable actuating device (29) for the stop (7) is provided.

9. Spool store (1) according to Claim 8, **characterized in that** the actuating device (29) is arranged in a fixed location and the stop (7) is displaced as it travels over the activated actuating device (29).

10. Spool store (1) according to Claim 8 or 9, **characterized in that** the stop (7) is arranged on one arm (24, 25) of a two-armed lever (22), and the actuating device (29) acts on the other arm (33).

11. Spool store (1) according to one of Claims 8 to 10, **characterized in that** the actuating device (29) is arranged to be offset laterally in the axial direction of the spool (3) in relation to the coupling arrangement (9).

12. Spool store (1) according to one of Claims 5 to 11, **characterized in that** the coupling arrangement (9) is formed as a chain.

13. Spool store (1) according to one of the preceding claims, **characterized in that** the drive device has a position sensor (11).

14. Spool store (1) according to one of the preceding claims, **characterized in that** the drive device can be moved more quickly in the returning direction (18) than in the conveying direction (17).

## Revendications

1. Dispositif de stockage de tambours (1) comprenant des rails de guidage (2) sur les deux côtés longitudinaux, qui relient entre elles au moins deux positions de magasin pour un tambour (3), un dispositif d'entraînement (7-16) étant prévu, lequel déplace le tambour (3) d'une position de magasin dans une autre position de magasin, le dispositif d'entraînement (7-16) agissant simultanément aux deux extrémités du tambour (3), le dispositif d'entraînement (7-16) présentant, pour chaque extrémité du tambour (3), une butée mobile (7), la butée (7) pouvant être décalée entre une position active, dans laquelle elle peut être amenée en prise avec le tambour (3), et une position passive dans laquelle elle peut être déplacée sans engagement avec le tambour (3), et la butée (7) étant précontrainte dans la position active par un dispositif de rappel (28),
**caractérisé en ce que**
la butée (7) peut être déplacée dans un dispositif de transport (17) et un dispositif de retour (18), et
**en ce que** la butée (7) est déplacée par le tambour (3) dans sa position passive lors d'un déplacement dans la direction de retour (18).

2. Dispositif de stockage de tambours (1) selon la revendication 1, **caractérisé en ce que** les rails de guidage (2) sont disposés horizontalement ou sont inclinés vers le haut dans la direction de transport des tambours.

3. Dispositif de stockage de tambours (1) selon la revendication 2, **caractérisé en ce que** la butée (7) est fixée sur un support (8) qui est guidé parallèlement aux rails de guidage (2).

4. Dispositif de stockage de tambours (1) selon la revendication 2 ou 3, **caractérisé en ce que** la butée (7) est formée par un galet (21).

5. Dispositif de stockage de tambours (1) selon l'une quelconque des revendications 2 à 4, **caractérisé en ce que** la butée mobile (7) est connectée par le biais d'un agencement d'accouplement (9) à un entraînement stationnaire (16).

6. Dispositif de stockage de tambours (1) selon la revendication 5, **caractérisé en ce que** les butées (7) sont connectées aux deux extrémités du tambour (3) au même entraînement (16).

7. Dispositif de stockage de tambours (1) selon l'une quelconque des revendications précédentes, **caractérisé en ce que** la butée (7) est réalisée sans dispositif d'alimentation en énergie mobile.

8. Dispositif de stockage de tambours (1) selon l'une quelconque des revendications précédentes, **caractérisé en ce que** dans au moins une position de magasin, un dispositif de réglage décalable (29) est prévu pour la butée (7).

9. Dispositif de stockage de tambours (1) selon la revendication 8, **caractérisé en ce que** le dispositif de réglage (29) est disposé fixement en position et la butée (7) se décale lors du passage sur le dispositif de réglage activé (29).

10. Dispositif de stockage de tambours (1) selon la revendication 8 ou 9, **caractérisé en ce que** la butée (7) est disposée sur un bras (24, 25) d'un levier (22) à deux bras, et le dispositif de réglage (29) agit sur l'autre bras (33).

11. Dispositif de stockage de tambours (1) selon l'une quelconque des revendications 8 à 10, **caractérisé en ce que** le dispositif de réglage (29) est disposé dans la direction axiale du tambour (3) de manière décalée latéralement par rapport à l'agencement d'accouplement (9).

12. Dispositif de stockage de tambours (1) selon l'une quelconque des revendications 5 à 11, **caractérisé en ce que** l'agencement d'accouplement (9) est réalisé sous forme de chaîne.

13. Dispositif de stockage de tambours (1) selon l'une quelconque des revendications précédentes, **caractérisé en ce que** le dispositif d'entraînement présente un capteur de position (11).

14. Dispositif de stockage de tambours (1) selon l'une quelconque des revendications précédentes, **caractérisé en ce que** le dispositif d'entraînement peut être déplacé plus rapidement dans la direction de retour (18) que dans la direction de transport (17).
